# NEUE EUROPÄISCHE PATENTSCHRIFT

(11) **EP 0 205 167 B2**
(45) Veröffentlichungstag und Bekanntmachung des Hinweises auf die Entscheidung über den Einspruch: **30.08.1995**
(45) Hinweis auf die Patenterteilung: 25.01.1989
(21) Anmeldenummer: 86107964.8
(22) Anmeldetag: 11.06.1986
(51) Int. Cl.: F25B 17/08, F25B 27/00

(54) **Adsorptionskühler**
Adsorption cooler
Refroidisseur à adsorption

(30) Priorität: 14.06.1985 DE 3521484
(43) Veröffentlichungstag der Anmeldung: 17.12.1986
(73) Patentinhaber: ZEO-TECH Zeolith Technologie GmbH, D-85716 Unterschleissheim (DE)
(72) Erfinder: Maier-Laxhuber, Peter, Dr., D-8000 München 60 (DE); Kaubek, Fritz, Dipl.-Ing., D-8035 Gauting (DE)

(56) Entgegenhaltungen:
- CH-A- 647 590
- DE-A- 3 312 875
- DE-C- 636 013
- FR-B- 2 489 101
- FR-B- 2 489 488
- FR-B- 2 544 842
- FR-B- 2 562 994
- GB-A- 2 044 915
- GB-A- 2 103 509
- US-A- 1 647 208
- US-A- 1 809 958
- US-A- 1 886 339
- US-A- 2 053 683
- US-A- 2 068 333
- US-A- 2 138 686
- US-A- 2 287 172
- US-A- 4 459 814

## Beschreibung

Die Erfindung betrifft ein Verfahren und einen Sorptionsapparat zur Durchführung dieses Verfahrens gemäß den Oberbegriffen der Patentansprüche 1 und 5.

Sorptionsapparate mit einem festen Adsorptionsmittel waren lange Zeit zur Kühlung von Lebensmitteln im Einsatz. Die US-Patentschrift 1 647 208 beschreibt beispielsweise einen Kühlapparat mit Aktivkohle als Adsorptionsmittel und Alkohol als Arbeitsmittel. Der die Aktivkohle enthaltende Behälter ist dabei über einen flüssigkeitsgekühlten Kondensator an ein Sammelgefäß angeschlossen, dessen Ausgang wiederum über eine Rückschlagklappe mit einem Kühlbehälter verbunden ist. Das während einer Desorptionsphase aus dem Behälter ausgetriebene Arbeitsmittel wird im Kondensator verflüssigt und im Sammelbehälter zwischengespeichert bis in der darauffolgenden Adsorptionsphase der Arbeitsmitteldampfdruck im Sammelbehälter kleiner wird als der Druck im Kühlbehälter. Durch die sich aufbauende Druckdifferenz öffnet sich schließlich die Rückschlagklappe und läßt das zwischengespeicherte Arbeitsmittel in den Kühlbehälter ablaufen.

Das erst in jüngster Zeit vorgeschlagene Stoffpaar Zeolith/Wasser gehört ebenfalls zu den festen Stoffpaarungen, mit denen nur ein periodischer Kühlprozeß möglich ist. So ist beispielsweise in der schweizer Patentschrift CH 647 590 ein solarbetriebener Sorptionskühlschrank beschrieben, der im Verdampfer während der Adsorptionsphase eine Eisschicht erzeugt, die dann während der Desorptionsphase durch den aus der Zeolithfüllung desorbierten Wasserdampf wieder abgeschmolzen wird. Obwohl das neue Stoffpaar sehr gute thermodynamische Eigenschaften aufweist, ist dessen Einsatz in der Kältetechnik, bedingt durch die unbefriedigende periodische Kühlweise eingeschränkt.

Aus den FR-A- 2489488 und FR-A- 2489101 sind Adsorptionsapparate bekannt, bei denen während der Adsorptionsphase die Kälteleistung durch Regelung eines Ventils zwischen Kühlbehälter und Adsorptionsmittel beeinflußt wird.

Aufgabe der vorliegenden Erfindung ist es, ein Verfahren und eine Vorrichtung anzugeben, mit denen auch bei Verwendung fester Arbeitsmittel eine kontinuierliche Kühlweise möglich ist.

Gelöst wird diese Aufgabe durch ein Verfahren nach Anspruch 1 und einen Sorptionsapparat nach Anspruch 5.

Die abhängigen Unteransprüche beschreiben weitere vorteilhafte Verfahrensmerkmale und weitere vorteilhafte Weiterbildungen des erfindungsgemäßen Sorptionsapparates.

Die periodische Betriebsweise des Adsorptionskühlers wird in zwei Teilphasen gegliedert.

In eine Desorptionsphase, in welcher der Zeolith erhitzt wird. Dabei wird aus dem Zeolith Wasserdampf desorbiert und im angeschlossenen Kondensator verflüssigt. Das Kondensat tropft in den Sammelbehälter. Das Absperrorgan hindert es am Auslaufen in den Kühlbehälter. Die Dauer dieser Desorptionsphase einfache Weise geregelt werden. Die Kühlwirkung steht bei einem desorbierten und abgekühlten Adsorptionskühler, im Gegensatz zu einem konventionellen Kompressionssystem, sofort und mit ungewohnt hoher Leistung zur Verfügung. Auf dem bei Kompressionssystemen üblichen Kühlwasserpuffer kann verzichtet werden. Auch ohne Stromanschluß ist eine effektive Getränkekühlung möglich. In der Regel empfiehlt sich eine Erwärmung des Zeolithen während der Desorptionsphase über eine elektrische Widerstandsheizung. Da die Adsorptions- und Kondensationswärmen bei hohen Temperaturen (über 50°C) anfallen können, ist auch eine Nutzung der Abwärmen möglich. Sinnvoll ist beispielsweise eine Vorwärmung von Brauchwasser über einen flüssigkeitsgekühlten Kondensator. Der Kondensator sollte jedoch zusätzlich luftgekühlt sein, um die Kondensationswärme notfalls auch an die Umgebungsluft abgeben zu können.

Selbstverständlich lassen sich mit diesem erfindungsgemäßen Adsorptionskühler auch Kühlräume oder Kühlmöbel kühlen. Anstelle der Getränke zirkuliert in diesen Fällen eine Kühlsole durch den Wärmetauscher.

Die lage- und erschütterungsunabhängige Adsorption ermöglicht den Einbau des Adsorptionskühlers auch in Kraftfahrzeugen. Der Adsorptionskühler läßt sich dort sowohl zur Klimatisierung von PKW's und Bussen als auch zur Kühlung von Nutzfahrzeugen einsetzen. Der Zeolith wird dabei vorteilhafterweise durch die Motorabgase erwärmt und durch den Fahrtwind gekühlt. Ein Klappensystem in der Abgasleitung lenkt die Abgase während der Desorptionsphase über den Adsorptionsbehälter und während der Adsorptionsphase an diesem vorbei. Alternativ hierzu kann bei stehenden Fahrzeugen, die Erwärmung des Zeolithen auch über die Fahrzeugstandheizung erfolgen. Bei Kühlgutanhängern ist ein separater Brenner vorgesehen. Die Übertragung der im Kühlbehälter erzeugten bzw. gespeicherten Kälte in den zu kühlenden Raum erfolgt über einen Solekreislauf mit separater Umwälzpumpe. In PKW's eignet sich hierfür besonders der Kühlwasserkreislauf des Motors. Das Heizregister der Fahrzeugheizung kann auf diese Weise gleichzeitig als Kühlregister eingesetzt werden. Bei Kühlbedarf wird lediglich die Umwälzpumpe in Betrieb genommen. Besondere Vorteile gegenüber einer Fahrzeugkühlung mit Kompressionssystemen ergeben sich während der Startphase bei heißem Fahrzeuginnenraum, im Stop- und Go-Verkehr und bei abgestelltem Motor. Im Gegensatz zur mechanischen Kühlung bleibt die Kühlwirkung, je nach Zeolithmenge und Eisvorrat im Kühlbehälter, auch über einen längeren Zeitraum nach Abstellen des Motors erhalten. Für Taxifahrer beispielsweise ein willkommener Effekt. Auf die gleiche Weise lassen sich die aus dem Stop- und Go-Betrieb bekannten Kühlprobleme lösen. Ein durch Sonneneinstrahlung stark aufgeheiztes Fahrzeug kann mit konventionellen Systemen erst nach ca. 20 Minuten auf eine akzeptable Innenraumtemperatur abgekühlt werden. Ein Fahrzeug mit einem Adsorptionskühler kann dagegen vor dem Start des Motors mit hoher Leistung gekühlt werden. Da beim Abstellen des Motors das Absperrorgan kurzzeitig zum Ablassen des Kondensats in den Kühlbehältern geöffnet wird und anschließend verschlossen bleibt, kann der Zeolith im unbeladenen Zustand abkühlen und nach erneutem Öffnen des Absperrorgans stark adsorbieren. Die im Kühlbehälter erzeugte Kühlleistung ist dann besonders hoch.

Durch eine einfache regelungstechnische Maßnahme kann der Adsorptionskühler in der Warmlaufphase des Motors vorübergehend zum Aufheizen des Innenraumes genutzt werden. Während der ersten Desorptionsphase bleibt hierzu das Absperrorgan zum Kühlbehälter geöffnet. Der aus dem Zeolith desorbierte Dampf kondensiert dann am Wärmetauscher im Kühlbehälter. Die Kondensationswärme wird über den Kühlwasserkreislauf und das Heizregister an den Innenraum übertragen.

Eine weitere, sehr effektive Anwendungsmöglichkeit des Adsorptionskühlers findet sich im Bereich solarer Kühlung. Der Adsorptionsbehälter wird hierbei durch die Sonneneinstrahlung tagsüber erwärmt. Nachts kühlt sich der Zeolith ab und adsorbiert Wasser. Der Adsorptionskühler erzeugt dadurch während der Abkühlzeit Eis, das im Kühlbehälter gespeichert bleibt und für Kühlaufgaben am folgenden Tag genutzt werden kann. Es empfiehlt sich, den Kühlbehälter ausreichend groß zu dimensionieren, damit auch mehrere Tage ohne direkte Sonneneinstrahlung überbrückt werden können. Der solarbetriebene Adsorptionskühler kann, im Gegensatz zu allen bekannten Solarkühlsystemen, ohne Zusatzkomponenten wie Wasserkühlung oder Heißwasserspeicher auskommen. Als Absperrorgan genügt eine einfache, leichtgängige Rückschlagklappe, die zum Öffnen nach der Desorptionsphase durch Hilfsvorrichtungen (z. B. Magnet, Thermostat) unterstützt wird. Sobald das Kondensat in den Kühlbehälter abgeflossen ist, bleibt die Rückschlagklappe durch die Druckdifferenz zwischen Kühlbehälter und Adsorptionsbehälter geöffnet. Der Adsorptionsbehälter kann als Flachkollektor oder als kollimierender Kollektor ausgeführt sein. Letzterer erreicht leichter die zur effektiven Desorptions notwendigen Temperaturen von über 130°C. Der Sorptionsbehälter besteht vorzugsweise aus Glas, das mit einer geeigneten Beschichtung versehen ist. Der Zeolith kann zur besseren Wärmeaufnahme geschwärzt sein oder schwarze, lichtadsorbierende Beimischungen wie Aktivkohle, enthalten.

Adsorptionskühler mit nur einem Adsorptionsbehälter haben den Nachteil, daß sie nur während der Desorptionsphase Wärme aufnehmen können. Im Kraftfahrzeug beispielsweise, wo laufend Abgaswärme bereit steht, ist diese Art der Wärmenutzung unbefriedigend. Dieser Nachteil kann dadurch umgangen werden, daß an den Kühlbehälter ein zweites Absperrorgan mit einem Sammelbehälter, einem Kondensator und einem Adsorptionsbehälter angeschlossen ist. Die Betriebsweise dieser neu hinzugekommenen Elemente ist mit den bereits beschriebenen Desorption- und Adsorptionsphasen identisch. Entscheidender Vorteil ist jedoch, daß die einzelnen Phasen völlig unabhängig voneinander ablaufen können. Während ein Sorptionsbehälter erwärmt wird, kann der andere beispielsweise gekühlt werden und die Eismenge im Kühlbehälter vergrößern. Beide Adsorptionsbehälter können aber auch gleichphasig arbeiten, z. B. bei der oben beschriebenen Kühlung des Fahrzeugs beim Start.

Unter den Zeolithen eignen sich besonders der ionenausgetauschten Mg-A-Zeolith und die Y-Zeolithe Y-52 und Y-72 der Firma Union Carbide Korporation. Diese Zeolithe verfügen über ausreichende Zyklen- und Temperaturstabilitäten. Sie erlauben die Anwendung bei hohen Desorptions- und Kondensationstemperaturen. In der Zeichnung sind zwei Ausführungsformen der Erfindung dargestellt.
- Fig. 1: zeigt einen Adsorptionskühler mit den Grundelementen in der Anwendung als Bierkühler.
- Fig. 2: zeigt einen Adsorptionskühler mit zwei Adsorbern im Einsatz als Fahrzeugklimaanlage.

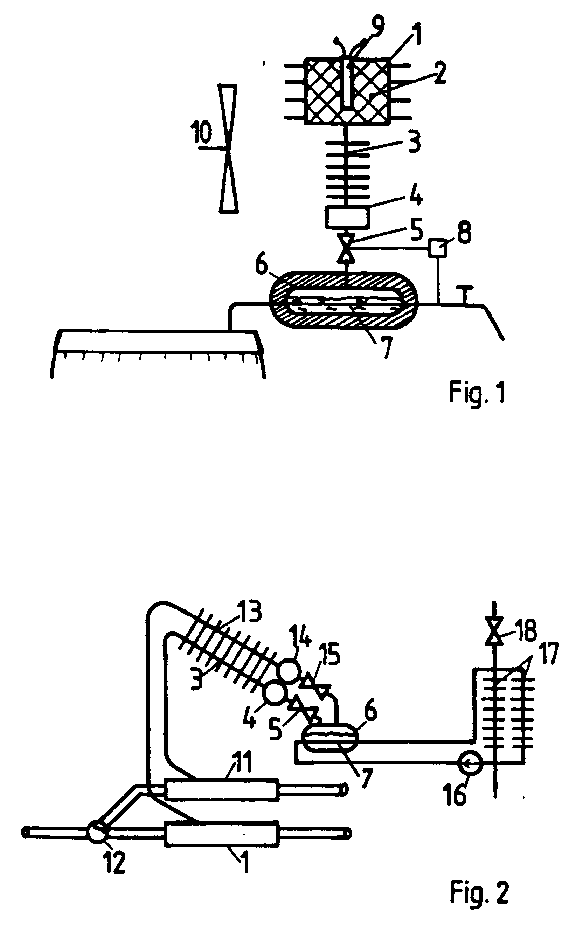

In Figur 1 enthält der mit Kühlrippen versehene Adsorptionsbehälter 1 einen Zeolith 2. Angeschlossen ist ein Kondensator 3, ein Sammelbehälter 4 und ein Absperrorgan 5. Durch den Kühlbehälter 6 führt ein Wärmetauscher 7. Der Wärmetauscher 7 ist Teil einer Bierleitung von einem Faß zu einem Zapfhahn. Die Temperatur des ausfließenden Bieres wird über einen Regler 8, welcher auf das Absperrorgan 5 wirkt, geregelt. Eine elektrische Heizung 9 erwärmt in der Desorptionsphase den Adsorptionsbehälter 1. Für die Wärmeabfuhr sorgt ein Ventilator 10.

Figur 2 zeigt schematisch einen erfindungsgemäßen Adsorptionskühler im Einsatz als Fahrzeugklimaanlage. Die beiden Adsorptionsbehälter 1 und 11 werden über 2 Abgasleitungen mit Wärme versorgt. Eine Klappe 12 steuert den Abgasstrom. An die Adsorptionsbehälter 1 und 11 sind die Kondensatoren 3 und 13, die Sammelbehälter 4 und 14 und die Absperrorgange 5 und 15 angeschlossen. Der isolierte Kühlbehälter 6 enthält den Wärmetauscher 7. Über diesen Wärmetauscher ist der Adsorptionskühler mit dem fahrzeugeigenen Kühlwasserkreis verbunden. Eine Umwälzpumpe 16 zirkuliert Kühlwasser über die Heizregister 17. Der gekühlte Kühlwasserkreis ist vom restlichen Kühlwassersystem des Motors durch eine Absperreinrichtung 18 getrennt.

## Patentansprüche

1. Sorptionsverfahren zur Kälteerzeugung mit periodisch abwechselnden Desorptionsphasen und Adsorptionsphasen, bei dem während der Desorptionsphase Arbeitsmittel unter relativ hohem Druck aus einem Adsorptionsmittel desorbiert, kondensiert und in einem Sammelbehälter zwischengespeichert wird, und während der Adsorptionsphase das kondensierte Arbeitsmittel in einen Kühlbehälter geleitet und dort verdampft sowie vom Adsorptionsmittel adsorbiert wird,
dadurch gekennzeichnet,
- daß während einer Adsorptionsphase durch Abkühlen des Adsorptionsmittels der Druck unterhalb des Erstarrungsdampfdrucks des Arbeitsmittels reduziert wird, so daß ein Teil des Arbeitsmittels im Kühlbehälter erstarrt, daß die Arbeitsmittelmenge so gewählt ist, daß am Ende der Adsorptionsphase eine erstarrte Menge des Arbeitsmittels im Kühlbehälter verbleibt und daß der Zutritt des Arbeitsmitteldampfes zum Adsorptionsmittel unterbunden wird, wenn keine Kälteleistung im Kühlbehälter benötigt wird.

2. Sorptionsverfahren nach Anspruch 1,
dadurch gekennzeichnet,
- daß im Sammelbehälter (4) zwischengespeichertes Arbeitsmittel vor dem Ableiten in den Kühlbehälter (6) durch Teilverdampfung bei niedrigem Druck unter die Verflüssigungstemperatur abgekühlt wird.

3. Sorptionsverfahren nach einem der vorhergehenden Ansprüche,
dadurch gekennzeichnet,
- daß nach längeren Unterbrechungen des Betriebs grundsätzlich mit einer Adsorptionsphase begonnen wird, gleichgültig zu welchem Zeitpunkt der Betrieb unterbrochen wurde.

4. Sorptionsverfahren nach einem der vorhergehenden Ansprüche,
dadurch gekennzeichnet,
- daß das Adsorptionsmittel tagsüber durch Sonneneinstrahlung desorbiert wird und die Adsorptionsphase während der Nacht stattfindet.

5. Sorptionsapparat für einen in sich geschlossenen Sorptionskreislauf zur Durchführung des Verfahrens nach Anspruch 1, mit einem Behälter (1) für Adsorptionsmittel, einem daran angeschlossenen Kondensator (3), einem Sammelbehälter (4) und einem Kühlbehälter (6), der einen Wärmetauscher (7) enthält, über den Wärme aus einem externen Wärmeträger an das Arbeitsmittel übertragbar ist, sowie einem Absperrorgan (5) zwischen dem Sammelbehälter (4) und dem Kühlbehälter (6), der so groß gewählt ist, daß er eine derart große Arbeitsmittelmenge aufnehmen kann, daß auch während der Desorptionsphase erstarrtes Arbeitsmittel Kühlbehälter (6) verbleibt und daß das Absperrorgan (5) so steuerbar ist, daß durch gesteuertes Öffnen und Schließen während der Adsorptionsphase die Temperatur des Arbeitsmittels im Kühlbehälter (6) einstellbar ist.

6. Sorptionsapparat nach Anspruch 5,
dadurch gekennzeichnet,
daß das Adsorptionsmittel Zeolith vom Typ Mg-A, Na-Y oder H-Y, und das Arbeitsmittel Wasser ist.

7. Sorptionsapparat nach Anspruch 5 oder 6,
dadurch gekennzeichnet,
- daß an den Kühlbehälter (6) der Reihe nach ein weiteres Absperrorgan (15), ein weiterer Sammelbehälter (1), ein weiterer Kondensator (13) und ein weiterer Behälter (11), gefüllt mit einer zusätzlichen Adsorptionsmittelmenge, angeschlossen ist.

8. Sorptionsapparat nach einem der Ansprüche 5 bis 7,
dadurch gekennzeichnet,
- daß der das Adsorptionsmittel enthaltende Behälter (1) aus Glas ist und zur Aufnahme von Strahlungswärme ausgebildet ist.

9. Sorptionsapparat nach Anspruch 8,
dadurch gekennzeichnet,
- daß das Adsorptionsmittel geschwärzt ist oder Beimengungen stark lichtadsorbierender Stoffe enthält.

10. Adsorptionsapparat nach einem der Ansprüche 5 bis 9,
dadurch gekennzeichnet,
- daß das Adsorptionsmittel mit der Auspuffleitung eines Kraftfahrzeuges wärmeleitend in Verbindung steht.

11. Sorptionsapparat nach einem der Ansprüche 5 bis 10,
dadurch gekennzeichnet,
- daß der im Kühlbehälter (6) angebrachte Wärmetauscher (7) über den Kühlwasserkreislauf eines Fahrzeugmotors mit dem konventionellen Heizungsregister (17) der Fahrzeugheizung verbunden ist.

12. Sorptionsapparat nach einem der Ansprüche 5 bis 11,
dadurch gekennzeichnet,
- daß das Absperrorgan (5) ein Thermostatventil ist, daß von der Austrittstemperatur des den Wärmetauscher (7) durchströmenden Mediums gesteuert wird.

13. Sorptionsapparat nach einem der Ansprüche 5 bis 11,
dadurch gekennzeichnet,
- daß das Absperrorgan (5) eine leichtgängige Rückschlagklappe ist, die zum Abfließen des verflüssigten Arbeitsmittels über eine magnetische oder thermostatische Hilfsvorrichtung verfügt.

## Claims

1. Sorption process for the production of cold with periodically alternating desorption phases and adsorption phases, wherein during the desorption phase working fluid at relatively high pressure is desorbed from an adsorbent, condensed and temporarily stored in a collecting vessel, and during the adsorption phase the condensed working fluid is passed into a cooling vessel and there evaporated and adsorbed by the adsorbent, characterised in that during an adsorption phase the pressure is reduced below the solidification vapour pressure of the working fluid by cooling the adsorbent so that a part of the working fluid in the cooling vessel solidifies, in that the quantity of working fluid is chosen so that at the end of the adsorption phase a solidified quantity of the working fluid remains in the cooling vessel, and in that the flow of working fluid vapour to the adsorbent is stopped when no cooling is required in the cooling vessel.

2. Sorption process according to claim 1, characterised in that working fluid stored temporarily in the collecting vessel (4) is cooled by partial evaporation at low pressure below the liquefaction temperature before being discharged into the cooling vessel (6).

3. Sorption process according to one of the preceding claims, characterised in that after lengthy interruptions in operation, the process is always restarted with an adsorption phase, regardless of the time at which the operation was interrupted.

4. Sorption process according to one of the preceding claims, characterised in that the adsorbent is desorbed by solar radiation during the day and the adsorption phase takes place during the night.

5. Sorption apparatus for a self-contained sorption circuit for implementation of the process according to claim 1, with a vessel (1) for adsorbent, a condenser (3) connected thereto, a collecting vessel (4) and a cooling vessel (6) which contains a heat exchanger (7) through which heat can be transferred from an external heat conveying medium to the working fluid, and a shut-off device (5) between the collecting vessel (4) and the cooling vessel (6) which is chosen with such a size that it can accommodate such a large quantity of working fluid that solidified working fluid remains in the cooling vessel (6) even during the desorption phase, and the shut-off device (5) can be controlled so that the temperature of the working fluid in the cooling vessel (6) can be adjusted by controlled opening and closing during the adsorption phase.

6. Sorption apparatus according to claim 5, characterised in that the adsorbent is zeolite of the type Mg-A, Na-Y or H-Y, and the working fluid is water.

7. Sorption apparatus according to claim 5 or 6, characterised in that in turn a further shut-off device (15), a further collecting vessel (1), a further condenser (13) and a further vessel (11) filled with an additional quantity of adsorbent, is connected to the cooling vessel (6).

8. Sorption apparatus according to one of claims 5 to 7, characterised in that the vessel (1) containing the adsorbent is made of glass and embodied to receive radiant heat.

9. Sorption apparatus according to claim 8, characterised in that the adsorbent is blackened or contains added quantities of highly light-adsorbent substances.

10. Sorption apparatus according to one of claims 5 to 9, characterised in that the adsorbent is in heat-conducting connection with the exhaust pipe of a motor vehicle.

11. Sorption apparatus according to one of claims 5 to 10, characterised in that the heat exchanger (7) in the cooling vessel (6) is connected to the conventional heater radiator (17) of the vehicle heater through the cooling water circuit of a vehicle engine.

12. Sorption apparatus according to one of claims 5 to 11, characterised in that the shut-off device (5) is a thermostatic valve which is controlled by the outlet temperature of the medium flowing through the heat exchanger (7).

13. Sorption apparatus according to one of claims 5 to 11, characterised in that the shut-off device (5) is a free-moving check valve which has a magnetic or thermostatic auxiliary device for draining the liquefied working fluid.

## Revendications

1. Procédé de sorption pour la production du froid avec phases alternées et périodiques de désorption et d'adsorption, dans lequel, pendant la phase de désorption, du milieu de travail est désorbé sous pression relativement élevée d'un agent adsorbant, puis est condensé et est temporairement stocké dans une cuve collectrice, alors que pendant la phase d'adsorption, le milieu de travail condensé est conduit dans une cuve de réfrigération dans laquelle il est évaporé et y est adsorbé par l'agent adsorbant,
caractérisé par
le fait que pendant la phase d'adsorption, et par refroidissement du milieu d'adsorption, la pression est abaissée en-dessous de la pression de vapeur de solidification. du milieu de travail de telle sorte qu'une partie du milieu de travail se solidifie dans la cuve de réfrigération, que la quantité en milieu de travail est choisie de telle sorte qu'à la fin de la phase d'adsorption une certaine quantité du milieu de travail solidifié subsiste dans la cuve de réfrigération et que l'accès de la vapeur du milieu de travail à l'agent adsorbant est interdit lorsqu'aucune puissance frigorifique n'est demandée au niveau de la cuve de réfrigération.

2. Procédé de sorption selon la revendication 1,
caractérisé par
le fait que le milieu de travail temporairement stocké dans la cuve collectrice (4) est, avant d'être transporté vers la cuve de réfrigération (6), refroidi, sous faible pression, à une température inférieure à la température de liquéfaction.

3. Procédé de sorption selon l'une des revendications précédentes
caractérisé par
le fait qu'après des arrêts prolongés du fonctionnement, on commence en principe par une phase d'adsorption, quel que soit le moment auquel le processus a été interrompu.

4. Procédé de sorption selon l'une des revendications précédentes,
caractérisé par
le fait que l'agent adsorbant est désorbé par irradiation solaire pendant la journée et que la phase d'adsorption a lieu pendant la nuit.

5. Appareil de sorption pour un circuit de sorption fermé sur soi-même, pour la mise en oeuvre du procédé selon la revendication 1, comportant une cuve (1) d'adsorption, reliée à un condenseur (3), un collecteur (4) et une cuve de réfrigération (6), qui contient un échangeur (7) de chaleur, par lequel de la chaleur, provenant d'un agent caloporteur externe, peut être transmise au fluide de travail, ainsi qu'un organe d'obturation (5) situé entre la cuve collectrice (4) et la cuve de réfrigération (6), qui est choisie si grande qu'elle peut recevoir une quantité de fluide de travail telle qu'il reste du fluide de travail congelé dans la cuve de réfrigération (6) même pendant la phase de désorption, et que l'organe d'obturation (5) est susceptible d'être commandé de manière que par ouverture et fermeture commandées il soit possible de régler, pendant la phase d'adsorption, la température du fluide de travail se trouvant dans la cuve de refroidissement (6).

6. Appareil à sorption selon la revendication 5,
caractérisé par
le fait que l'agent d'adsorption est une zéolithe du type Mg-A, Na-Y ou H-Y et le milieu de travail est de l'eau.

7. Appareil à sorption selon la revendication 5 ou 6,
caractérisé par
le fait qu'à la cuve de réfrigération (6) sont reliés successivement un deuxième organe d'obturation (5), une deuxième cuve collectrice (14), un deuxième condenseur (13) et une deuxième cuve réservoir (11) remplie d'une quantité supplémentaire d'agent d'adsorption.

8. Appareil à sorption selon l'une des revendications 5 à 7,
caractérisé par
le fait que la cuve (1) contenant l'agent d'adsorption ést en verre et peut absorber la chaleur rayonnante.

9. Appareil à sorption selon la revendication 8,
caractérisé par
le fait que l'agent d'adsorption est noirci ou comporte des additions de substances absorbant fortement la lumière.

10. Appareil à sorption selon l'une des revendications 5 à 9,
caractérisé par
le fait que l'agent d'adsorption est en liaison thermique avec le conduit des gaz d'échappement d'un véhicule automobile.

11. Appareil à sorption selon l'une des revendications 5 à 10,
caractérisé par
le fait que l'échangeur de chaleur (7) se trouvant dans la cuve de réfrigération (6) est relié, par l'intermédiaire du circuit d'eau de refroidissement d'un moteur de véhicule automobile, au registre de chauffage conventionnel (17) du véhicule automobile.

12. Appareil à sorption selon l'une des revendications 5 à 11,
caractérisé par
le fait que l'organe d'obturation (5) est une soupape thermostatique qui est commandée en fonction de la température de sortie du milieu circulant dans l'échangeur de chaleur (7).

13. Appareil à sorption selon l'une des revendications 5 à 11,
caractérisé par
le fait que l'organe d'obturation (5) est un clapet anti-retour libre qui dispose, pour l'évacuation du milieu de travail liquéfié, d'un dispositif auxiliaire magnétique ou thermostatique.
